# EUROPEAN PATENT SPECIFICATION

(11) **EP 3 447 970 B1**
(45) Date of publication and mention of the grant of the patent: **08.04.2020**
(21) Application number: 17892056.7
(22) Date of filing: 13.07.2017
(51) Int. Cl.: H04L 12/28, H04N 21/845, H04L 29/08

(54) **LIVE BROADCAST SYSTEM IN PEER-TO-PEER NETWORK AND NODE MANAGEMENT METHOD**
LIVE-RUNDFUNKSYSTEM IN PEER-TO-PEER-NETZWERK UND KNOTENVERWALTUNGSVERFAHREN
SYSTÈME DE DIFFUSION EN DIRECT DANS UN RÉSEAU POSTE À POSTE ET PROCÉDÉ DE GESTION DE NOEUD

(30) Priority: 19.06.2017 CN 201710465541
(43) Date of publication of application: 27.02.2019
(73) Proprietor: Wangsu Science & Technology Co., Ltd., Shanghai 200030 (CN)
(72) Inventor: LU, Meihui, Shanghai 200030 (CN); CHEN, Hong, Shanghai 200030 (CN); LV, Shibiao, Shanghai 200030 (CN)
(74) Representative: Hanna Moore + Curley
(86) International application number: PCT/CN2017/092790
(87) International publication number: WO 2018/232798

(56) References cited:
- EP-A2- 2 084 881
- WO-A1-2010/145199
- CN-A- 101 094 107
- CN-A- 102 917 028
- CN-A- 103 312 574
- CN-A- 104 796 730
- US-A1- 2008 133 767

## Description

### FIELD OF THE DISCLOSURE

The present disclosure generally relates to the Internet live streaming technology and, more particularly, relates to a live streaming system and a node management method applied to streaming media in a peer-to-peer network.

### BACKGROUND

Peer-to-peer network transmission technology, i.e., P2P technology, is a new communication network transmission technology emerging in the recent years. The P2P network transmission breaks away from the traditional client/server (C/S) model and establishes a direct communication mechanism between client-ends. In the P2P network, each node serves as a client-end and as a server for other client-ends. To certain extent, each node takes an equal position. The P2P network is a successful expansion to the distributed network concept, and distributes server workload under traditional model to each and every node in the P2P network. Thus, not only the server workload is substantially reduced, but also the traffic carrying cost of the content delivery network (CDN) is substantially reduced.

In the P2P network, each node (peer) may obtain a large amount of information about other peer nodes from the node management server (aka tracker) and may retrieve data by establishing connections to the other peer nodes. In the existing P2P based live streaming applications, especially for low latency live streaming applications, the requirement for the node performance is stringent. The existing technology primarily depends on the node management server (tracker) for node recommendations. However, the nodes recommended by the node management server (tracker) may be unable to maintain high performing all the time. When a certain node underperforms during live streaming, the live streaming system may not automatically recognize the change and may continue to use the underperforming node. Thus, the overall P2P sharing rate in live streaming applications may be substantially low, the resource allocation efficiency may remain low, and the user experience may be degraded.

The document US 2008/0133767 A1 discloses a peer-to-peer platform which makes use of a streaming agent running at each peer. The document EP 2084881 A2 discloses a method and system for real-time streaming over a peer-to-peer grid network. The document CN 102917028 A discloses a network video live broadcasting caching method.

### BRIEF SUMMARY OF THE DISCLOSURE

To solve issues in the existing technology, the present disclosure provides a peer-to-peer network live streaming system and a node management method as described in the claims.

The live streaming system according to the present disclosure includes the first server configured to establish a connection between nodes to enable node information sharing, the evaluation module configured to evaluate a node health value for the node, and the purging module configured to purge poor quality nodes. The evaluation module calculates and analyzes a health value for the node primarily based on the node information, and feeds the analysis result to the purging module such that the purging module determines whether to continue to use or purge the evaluated node. The live streaming system and the node management method according to the present disclosure rapidly screens and purges poor quality peer nodes among a large number of nodes, connects good quality nodes together to obtain the data, improves the sharing rate of the peer-to-peer network, and thus improves the user experience.

### BRIEF DESCRIPTION OF THE DRAWINGS

To more clearly illustrate the technical solution in the present disclosure, the accompanying drawings to be used in the description of the disclosed embodiments are briefly described hereinafter. Obviously, the drawings described below are merely some embodiments of the present disclosure. Other drawings derived from such drawings may be obtained by a person having ordinary skill in the art without creative labor.
FIG. 1 illustrates a schematic diagram of an exemplary live streaming system according to Embodiment 1 of the present disclosure;
FIG. 2 illustrates a flow chart of an exemplary node management method according to Embodiment 1 of the present disclosure;
FIG. 3 illustrates a schematic diagram of an exemplary server and exemplary modules in the live streaming system according to Embodiment 1 of the present disclosure; and
FIG. 4 illustrates a schematic diagram of exemplary modules according to Embodiment 2 of the present disclosure.

Reference numerals are listed as followings:
First server: 10
Second server: 20
Transmitting module: 21
Third server: 30
Fourth server: 40
Nodes: 50, 50A, 50B
Receiving module: 51
Evaluation module: 52
Purging module: 53
Transmitting module: 100
Receiving module: 200
Evaluation module: 300
Purging module: 400

### DETAILED DESCRIPTION

The objectives, features, and advantages of the present disclosure will become clearer from the following description of the embodiments of the present disclosure when taken in conjunction with the accompanying drawings. It should be understood that the specific embodiments described herein are merely illustrative of the present disclosure and are not intended to limit the present disclosure.

The live streaming system and the operation principle in the context of peer-to-peer network provided by the present disclosure will be described in detail below.

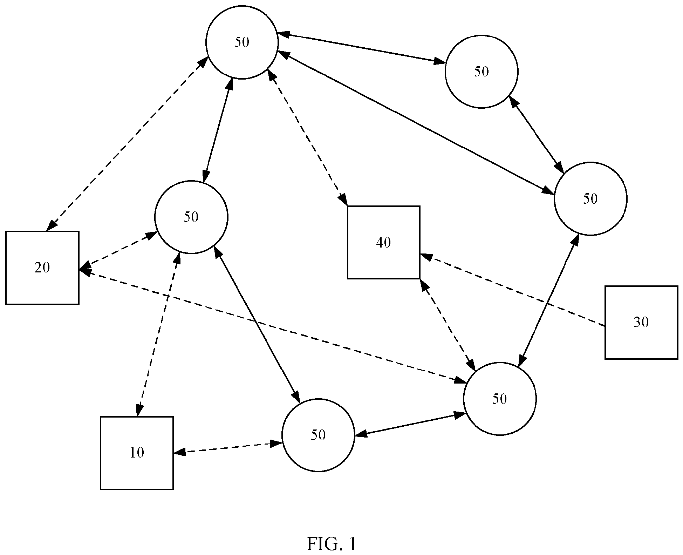

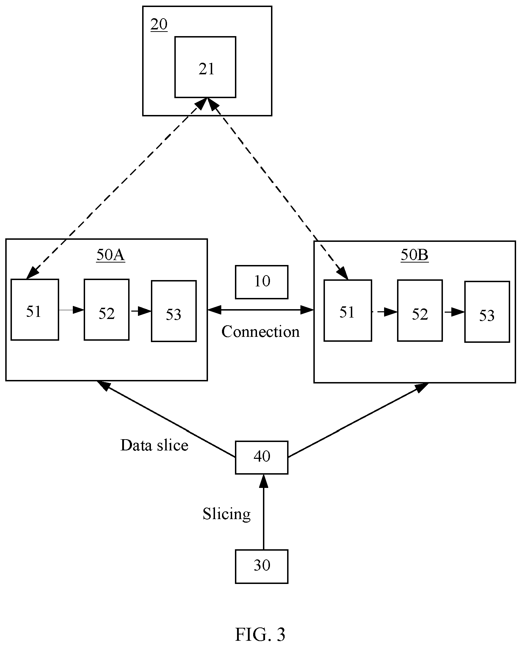

Referring to FIG.1 through FIG. 3, the live streaming system and the node management method provided by Embodiment 1 may be illustrated. As shown in FIG. 1 and FIG. 3, the live streaming system may be intended for live streaming application in the peer-to-peer network. The live streaming system may include a first server 10, a second server 20, a third server 30, a fourth server 40, and two nodes 50A and 50B.

The first server 10 may be essentially a tunneling server, e.g., *openrtmfp* server. The *openrtmfp* server may be a fully open source and cross platform extensible *rtmfp* server script configured to assist two nodes 50A and 50B to establish a connection. Of course, the first server 10 may be other type of servers that provide identical functions, e.g., *stun* tunneling server. The first server 10 may establish a connection between the two nodes 50A and 50B such that the two nodes 50A and 50B may share node information.

The second server 20 may provide a management function for all nodes 50A and 50B. The second server 20 may include a transmitting module 21. The transmitting module 21 may first send a node list to the nodes 50A and 50B in response to a client-end request. The node list may be real-time.

The third server 30 may be a slicing server configured to slice live media stream into data slices based on timestamps in the live media stream. The third server 30 may operate as follows. When starting slicing the live media stream into data slices, the third server 30 may first obtain the current system time, i.e., the initial system time *t0.* The timestamp of the live media stream may start from 0. Then, every time the timestamp of the live media stream increases by Δ*t,* a data slice may be sliced, and the system time plus the current timestamp *t0* + Δ*t* may be used as the filename and as the file sequence number of the current data slice. That is, the file sequence number of the latest data slice may also represent the time *t0* + Δ*t.* For example, the live streaming data that has the timestamps 0∼*n*ms may be sliced into a first data slice having a filename *1.FL V.* The live streaming data that has the timestamps *n∼*(*n*+1)ms may be sliced into a second data slice having a filename *2.FLV.* So on so forth. *n* is a positive integer, and ms is a time unit.

The fourth server 40 is a content distribution network (CDN) server configured to receive the data slices sent by the third server 30, and to distribute the data slices to the nodes 50A and 50B. When running out of the live streaming data, the nodes 50A and 50B may request for more data slices from the fourth server 40.

Each node 50A and 50B may be configured with a receiving module 51, an evaluation module 52, and a purging module 53. Taking the node 50A for example, the receiving module 51 may be used to receive the node list sent by the transmitting module 21 of the second server 20 and node information shared with nodes connected to the node 50A. The evaluation module 52 may calculate and analyze a health value of the node 50B based on the node information, and may feed the health value to the purging module 53. It should be noted that, in one embodiment, the evaluation module 52 may be used to evaluate a corresponding node that is connected to the node where the evaluation module 52 belongs. That is, the evaluation module 52 of the node 50A may not evaluate the node 50A, and may evaluate the health value of the node 50B that is connected to the node 50A. Based on the time represented by the file sequence number of the latest data slice of the live media stream and the node information, the evaluation module 52 may calculate and analyze the health value of the node 50B. The node information may include an initial node value for establishing a connection between peer nodes and a time when the node receives a data slice. The node initial value may be a pre-configured initial health value for the evaluated node 50B after a connection between a pair of nodes (50A and 50B) is established. The pre-configured initial health value may not be fixed, and may be adjusted according to the actual network condition.

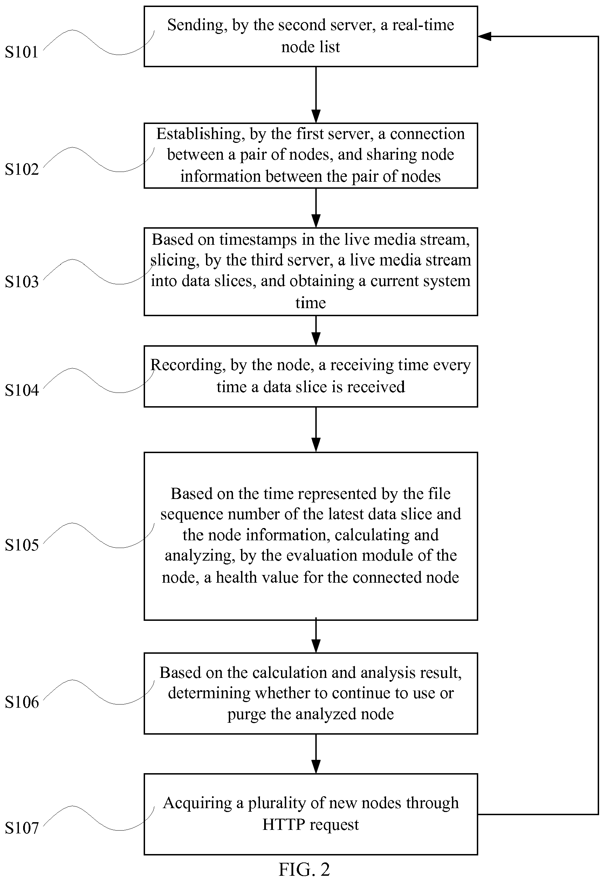

In Embodiment 1, referring to FIG. 2 and FIG. 3, the node management method in the live streaming system may include the following steps.

Step S101: sending, by the second server 20, a real-time node list.

Step S102: establishing, by the first server 10, a connection between a pair of nodes (50A and 50B), and sharing peer node information between the pair of nodes (50A and 50B).

Step S103: based on timestamps in the live media stream, slicing, by the third server 30, a live media stream into data slices, and obtaining a current system time. The detail operation process of the third server 30 may be referred to the previous description, and is not repeated here.

Step S104: assuming that the node 50B is to be evaluated, recording, by the node 50B, a receiving time every time a data slice is received.

Step S105: based on the time represented by the file sequence number of the latest data slice and the node information, calculating and analyzing, by the evaluation module 52 of the node 50A, a health value for the node 50B. The node information may include a node initial value and a time when a data slice is received by the node.

Step S106: feeding, by the evaluation module 52, the calculation and analysis result to the purging module 53. When the health value for the node 50B is high, the quality requirement may be satisfied, the purging module 53 may not purge the peer node 50B, and the pair of nodes (50A and 50B) may remain connected. When the health value for the node 50B is low, the quality requirement may not be satisfied, and the purging module 53 may purge the node 50B.

The evaluation module 52 may use an estimation method as follows. Assuming that a health value of the node is *Q,* a node initial value is *n,* and a difference between the time a data slice is received by the node and the time represented by the file sequence number of the latest data slice is *m.* The calculation time is every time the nodes 50A and/or 50B receive a data slice, the health value is re-calculated by weight. The node health value *Q* may be approximately equal to the weighted average of the node initial value *n* and the difference *m.* When necessary, a certain smoothing factor may be introduced to increase the precision of the health value calculation. Node purging may be based on a weight value or a pre-configured threshold. The calculated health value *Q* may be compared to the threshold to analyze whether the threshold is crossed to determine whether the node may be purged or may continue to be used. The above estimation method is intended to be illustrative, and may be adjusted according to the actual application scenario. The adjustment may include calculation method and calculation parameters, etc.

Step S107: acquiring, by the node 50, a plurality of new nodes through HTTP request from the second server 20, where the new nodes continue to go through the steps S101∼S106, and so on so forth.

For illustrative purposes, Embodiment 1 of the present disclosure includes a pair of nodes 50A and 50B. In practical applications, the process may not be limited to a pair of nodes. It should be understood that node purging or recommendation result may not be fixed, and may be dynamically changed according to the real-time status of the nodes.

Embodiment 1 of the present disclosure provides a live streaming system, comprising a first server configured to establish a connection between nodes to share node information, a second server configured to transmit a node list, a third server configured to slice live media stream into data slices, a fourth server configured to distribute the data slices to the nodes, an evaluation module configured to evaluate a node health value primarily based on the shared node information, and a purging module configured to determine whether to continue to use or purge the evaluated node based on the evaluation result. The node management method of Embodiment 1 may first establish a connection between the nodes to enable node information sharing. The evaluation module may calculate and analyze a health value for the corresponding node primarily based on the node information, and may feed the analysis result to the purging module such that the purging module may determine whether to continue to use or purge the evaluated node. The node information may depend on the slicing service of the third server, the connection service of the second server, and the distribution service of the fourth server. The live streaming system and the node management method provided by Embodiment 1 of the present disclosure may rapidly screen and purge poor quality nodes among a large number of nodes, connect the good quality nodes together to obtain the data, improve the sharing rate of the peer-to-peer network, and thus improve the user experience. The node purging and recommendation result may not be fixed, and may be adjusted according to the actual status to improve the efficiency of the resource utilization of the live streaming system. The evaluation module may be distributed in each node to improve the efficiency of the evaluation.

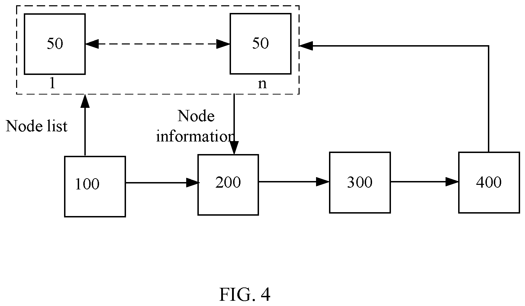

Embodiment 2 of the present disclosure may be illustrated in FIG. 4. The live streaming system provided by Embodiment 2 may include a plurality of nodes 50, a transmitting module 100, a receiving module 200, an evaluation module 300, and a purging module 400.

Based on the client-end response, the transmitting module 100 may transmit a real-time node list to all nodes 50. The receiving module 200 may receive the node list transmitted by the transmitting module 100 and the node information shared by the connected nodes. The evaluation module 300 may calculate and analyze a health value of the node to be evaluated based on the node information, and may feed the evaluation result to the purging module 400. Based on the feedback result, the purging module 400 may determine whether to continue to use or purge the evaluated node. The node information may be the same as in Embodiment 1. The evaluation principle of the evaluation module 400 may be the same as in Embodiment 1, and is not repeated here.

The live streaming system provided by Embodiment 2 of the present disclosure may include *n* (*n* is a positive integer greater than 0) number of nodes 50 that are connected, share the node information, and are labeled as 1 through *n*, the purging module that determines whether to continue to use or purge the evaluated node, and the evaluation module that evaluates the health value of the evaluated node based on the shared node information. Based on the node information, the evaluation module may calculate and analyze the health value for the corresponding node, and may feed the analysis result to the purging module 400 to determine whether to continue to use or purge the evaluated node. In Embodiment 2, the transmitting module 100, the receiving module 200, the evaluation module 300, and the purging module 400 may provide the same or similar functions as the transmitting module 21, the receiving module 51, the evaluation module 52, and the purging module 53 in Embodiment 1. The description is not repeated here. The live streaming system provided by Embodiment 2 of the present disclosure may not be confined to any specific server configuration and architecture. The receiving module 200, the evaluation module 300, and the purging module 400 may not be limited to be configured in the nodes 50. The live streaming system provided by Embodiment 2 of the present disclosure may rapidly screen and purge poor quality nodes among a large number of nodes, connect the good quality nodes together to obtain the data, improve the sharing rate of the peer-to-peer network, and thus improve the user experience. The evaluation module may be distributed in each node to improve the efficiency of the evaluation.

Embodiment 3 of the present disclosure also provides a live streaming system. The live streaming system may include a memory. The memory may store instructions for executing the steps S101∼S107 of the live streaming method.

Embodiment 4 of the present disclosure also provides a live streaming system. The live streaming system may include a hardware processor. The processor may be used to execute the steps S101∼S107 of the live streaming method.

The system embodiments described above are merely for illustrative purpose. The units described as separated parts may or may not be physically detached. The parts displayed as units may or may not be physical units, i.e., may be located at one place, or distributed at a plurality of network units. Based on the actual needs, a part or all of the modules may be selected to achieve the objective of the embodiments. Those ordinarily skilled in the art may understand and implement the disclosed embodiments without contributing creative labor.

Through the descriptions of various aforementioned embodiments, those skilled in the art may clearly understand that the embodiments may be implemented by means of software in conjunction with an essential common hardware platform, or may be simply implemented by hardware. Based on such understanding, the essential part of the aforementioned technical solutions or the part that contribute to the prior art may be embodied in the form of software products. The software products may be stored in computer readable storage media, such as ROM/RAM, magnetic disk, and optical disk, etc., and may include a plurality of instructions to enable a computer device (may be a personal computer, a server, or a network device) to execute the methods described in various embodiments or parts of the embodiments.

## Claims

1. A peer-to-peer network live streaming system, comprising:
at least two nodes; and
a first server (10), wherein:
the first server is used to establish a connection between the nodes (50; 50A; 50B) to enable the nodes to share node information, wherein the node information includes an initial node value of a corresponding connected node of the nodes and time when a data slice of a live media stream is received by the corresponding connected node;
at least either of the nodes is configured with an evaluation module (52; 300) and a purging module (53; 400); and
the evaluation module (52; 300) is configured to calculate and analyze a health value for the corresponding connected node based on the node information and time represented by a file sequence number of a received latest data slice of the live media stream, and to feed the result to the purging module to determine whether to continue to use or purge the corresponding connected node.

2. The live streaming system according to claim 1, further including a third server (30) configured to slice the live media stream into data slices according to timestamps in the live media stream, and to obtain a current system time before starting slicing the live media stream into the data slices.

3. The live streaming system according to any one of claims 1 to 2, wherein:
the evaluation module is configured to evaluate the corresponding node that is connected to the node where the evaluation module is located.

4. A peer-to-peer network node management method, comprising:
establishing a connection between at least a first node (50A) and a second node (50B) to enable node information sharing, wherein the node information includes an initial value of the second node and a time when a data slice of a live media stream is received by the second node;
calculating and analyzing a health value for the second node (50B) based on the node information and time represented by a file sequence number of a received latest data slice of the live media stream; and
determining whether to continue to use or purge the second node (50B) based on the calculation and analysis result.

5. The peer-to-peer network node management method according to claim 4, further including:
slicing the live media stream into data slices according to timestamps in the live media stream; and
obtaining a current system time.

6. The peer-to-peer network node management method according to claim5, further including:
recording the time when the data slice is received by the second node.

7. The peer-to-peer network node management method according to claim 4, wherein calculating and analyzing a health value for the second node based on the node information and time represented by a file sequence number of a received latest data slice of the live media stream includes:
comparing a health value of the second node to a pre-configured threshold or sorting a plurality of health values in order to determine whether to continue to use or purge the second node.

8. A peer-to-peer network live streaming system, the system comprising a memory configured to store instructions for implementing the node management method according to any of claims 4-7.

9. A peer-to-peer network live streaming system, the system comprising a processor configured to execute the node management method according to any of claims 4-7.

10. A peer-to-peer network live streaming system, comprising:
at least two nodes, wherein the nodes are connected with each other and share node information including an initial node value of a corresponding connected node of the nodes and time when a data slice of a live media stream is received by the corresponding connected node;
an evaluation module (52; 300) configured in at least either of the nodes to calculate and analyze a health value for the corresponding connected node based on the shared node information and time represented by a file sequence number of a received latest data slice of the live media stream; and
a purging module (53; 400) configured to receive results fed by the evaluation module and determine whether to continue to use or purge the corresponding connected node.

11. The peer-to-peer network live streaming system according to claim 10, further including:
a transmitting module (21) configured to transmit a node list in real-time; and
a receiving module (51; 200) configured to receive the node list transmitted by the transmitting module and the shared node information.

12. The peer-to-peer network live streaming system according to claim 1, wherein the evaluation module (52; 300) is further configured to compare the calculated health value of the corresponding connected node to a pre-configured threshold, and to feed the comparison result to the purging module (53; 400).

13. The peer-to-peer network live streaming system according to claim 10, wherein the evaluation module (52; 300) is further configured to compare the calculated health value of the corresponding connected node to a pre-configured threshold, and to feed the comparison result to the purging module (53; 400).

## Patentansprüche

1. Peer-zu-Peer-Netzwerk-Livestreamingsystem, umfassend:
mindestens zwei Knoten; und
einen ersten Server (10), wobei:
der erste Server verwendet wird, um eine Verbindung zwischen den Knoten (50; 50A; 50B) einzurichten, um den Knoten zu ermöglichen, Informationen gemeinsam zu nutzen, wobei die Knoteninformationen einen anfänglichen Knotenwert eines entsprechenden angebundenen Knoten der Knoten und einen Zeitpunkt enthalten, zu dem eine Datenscheibe eines Live-Medienstroms vom entsprechenden angebundenen Knoten empfangen wird;
mindestens einer der Knoten mit einem Bewertungsmodul (52; 300) und einem Eliminierungsmodul (53; 400) konfiguriert ist; und
das Bewertungsmodul (52; 300) ausgelegt ist, einen Integritätswert für den entsprechenden angebundenen Knoten auf Grundlage der Knoteninformationen und des Zeitpunkts zu berechnen, der durch eine Dateifolgenummer einer empfangenen jüngsten Datenscheibe des Live-Medienstroms repräsentiert wird, und das Ergebnis dem Eliminierungsmodul zu liefern, um zu ermitteln, ob der entsprechende angebundene Knoten zu verwenden oder zu eliminieren ist.

2. Livestreamingsystem nach Anspruch 1, das ferner einen dritten Server (30) enthält, der ausgelegt ist, den Live-Medienstrom in Übereinstimmung mit Zeitstempeln des Live-Medienstroms in Datenscheiben aufzuteilen und vor dem Beginn der Aufteilung des Live-Medienstroms in die Datenscheiben eine aktuelle Systemzeit zu erhalten.

3. Livestreamingsystem nach einem der Ansprüche 1 bis 2, wobei:
das Bewertungsmodul ausgelegt ist, den entsprechenden Knoten zu bewerten, der mit dem Knoten verbunden ist, an dem sich das Auswertungsmodul befindet.

4. Peer-zu-Peer-Netzwerkknotenverwaltungsverfahren, umfassend:
Einrichten einer Verbindung zwischen zumindest einem ersten Knoten (50A) und einem zweiten Knoten (50B), um ein gemeinsames Nutzen von Knoteninformationen zu ermöglichen, wobei die Knoteninformationen einen Anfangswert des zweiten Knotens und einen Zeitpunkt enthalten, zu dem eine Datenscheibe eines Live-Medienstroms vom zweiten Knoten empfangen wird;
Berechnen und Analysieren eines Integritätswerts des zweiten Knotens (50B) auf Grundlage der Knoteninformationen und des Zeitpunkts, der durch eine Dateifolgenummer einer empfangenen jüngsten Datenscheibe des Live-Medienstroms repräsentiert wird; und
Ermitteln, auf Grundlage der Berechnung und des Analyseergebnisses, ob der zweite Knoten (50B) weiterhin zu verwenden ist oder zu eliminieren ist.

5. Peer-zu-Peer-Netzwerkknotenverwaltungsverfahren nach Anspruch 4, ferner enthaltend:
Aufteilen des Live-Medienstroms in Datenscheiben in Übereinstimmung mit Zeitstempeln im Live-Medienstrom; und
Erhalten einer aktuellen Systemzeit.

6. Peer-zu-Peer-Netzwerkknotenverwaltungsverfahren nach Anspruch 5, ferner enthaltend:
Aufzeichnen des Zeitpunkts, zu dem die Datenscheibe vom zweiten Knoten empfangen wird.

7. Peer-zu-Peer-Netzwerkknotenverwaltungsverfahren nach Anspruch 4, wobei das Berechnen und Analysieren eines Integritätswerts des zweiten Knotens auf Grundlage der Knoteninformationen und des Zeitpunkts, der durch eine Dateifolgenummer einer empfangenen jüngsten Datenscheibe des Live-Medienstroms repräsentiert wird, enthält:
Vergleichen eines Integritätswerts des zweiten Knotens mit einem vorkonfigurierten Schwellenwert oder Sortieren einer Vielzahl von Integritätswerten, um zu ermitteln, ob der zweite Knoten weiterhin zu verwenden ist oder zu eliminieren ist.

8. Peer-zu-Peer-Netzwerk-Livestreamingsystem, wobei das System einen Arbeitsspeicher umfasst, der ausgelegt ist, Anweisungen zum Implementieren des Knotenverwaltungsverfahrens nach einem der Ansprüche 4-7 zu speichern.

9. Peer-zu-Peer-Netzwerk-Livestreamingsystem, wobei das System einen Prozessor umfasst, der ausgelegt ist, das Knotenverwaltungsverfahren nach einem der Ansprüche 4-7 auszuführen.

10. Peer-zu-Peer-Netzwerk-Livestreamingsystem, umfassend:
mindestens zwei Knoten, wobei die Knoten miteinander verbunden sind und Knoteninformationen gemeinsam nutzen, die einen anfänglichen Knotenwert eines entsprechenden angebundenen Knoten der Knoten und einen Zeitpunkt enthalten, zu dem eine Datenscheibe eines Live-Medienstroms vom entsprechenden angebundenen Knoten empfangen wird;
ein Bewertungsmodul (52; 300), das in mindestens einem der beiden Knoten konfiguriert ist, einen Integritätswert für den entsprechenden angebundenen Knoten auf Grundlage der gemeinsam genutzten Knoteninformationen und des Zeitpunkts zu berechnen, der durch eine Dateifolgenummer einer empfangenen jüngsten Datenscheibe des Live-Medienstroms repräsentiert wird; und
ein Eliminierungsmodul (53; 400), das ausgelegt ist, vom Auswertungsmodul gelieferte Ergebnisse zu empfangen und zu ermitteln, ob der entsprechende angebundene Knoten weiterhin zu verwenden oder zu eliminieren ist.

11. Peer-zu-Peer-Netzwerk-Livestreamingsystem nach Anspruch 10, ferner enthaltend:
ein Sendemodul (21), das ausgelegt ist, eine Knotenliste in Echtzeit zu senden; und
ein Empfangsmodul (51; 200), das ausgelegt ist, die vom Sendemodul gesendete Knotenliste und die gemeinsam genutzten Knoteninformationen zu empfangen.

12. Peer-zu-Peer-Netzwerk-Livestreamingsystem nach Anspruch 1, wobei das Auswertungsmodul (52; 300) ferner ausgelegt ist, den berechneten Integritätswert des entsprechenden angebundenen Knotens mit einem vorkonfigurierten Schwellenwert zu vergleichen und dem Eliminierungsmodul (53; 400) das Vergleichsergebnis zu liefern.

13. Peer-zu-Peer-Netzwerk-Livestreamingsystem nach Anspruch 10, wobei das Auswertungsmodul (52; 300) ferner ausgelegt ist, den berechneten Integritätswert des entsprechenden angebundenen Knotens mit einem vorkonfigurierten Schwellenwert zu vergleichen und dem Eliminierungsmodul (53; 400) das Vergleichsergebnis zu liefern.

## Revendications

1. Système de diffusion en continu en direct de réseau poste à poste, comprenant :
au moins deux nœuds ; et
un premier serveur (10), dans lequel :
le premier serveur est utilisé pour établir une connexion entre les nœuds (50 ; 50A ; 50B) pour permettre aux nœuds de partager des informations de nœud, dans lequel les informations de nœud comprennent une valeur de nœud initiale d'un nœud connecté correspondant des nœuds et l'heure à laquelle une tranche de données d'un flux multimédia en direct est reçue par le nœud connecté correspondant ;
au moins l'un ou l'autre des nœuds est configuré avec un module d'évaluation (52 ; 300) et un module de purge (53 ; 400) ; et
le module d'évaluation (52 ; 300) est configuré pour calculer et analyser une valeur d'intégrité pour le nœud connecté correspondant sur la base des informations de nœud et de l'heure représentées par un numéro de séquence de fichiers d'une dernière tranche de données reçue du flux multimédia en direct, et pour fournir le résultat au module de purge afin de déterminer s'il faut continuer à utiliser ou purger le nœud connecté correspondant.

2. Système de diffusion en continu en direct selon la revendication 1, comprenant en outre un troisième serveur (30) configuré pour trancher le flux multimédia en direct en tranches de données selon des horodatages dans le flux multimédia en direct, et pour obtenir une heure système actuelle avant de commencer à trancher le flux multimédia en direct en tranches de données.

3. Système de diffusion en continu en direct selon l'une quelconque des revendications 1 à 2, dans lequel :
le module d'évaluation est configuré pour évaluer le nœud correspondant qui est connecté au nœud où se trouve le module d'évaluation.

4. Procédé de gestion de nœud de réseau poste à poste, comprenant :
l'établissement d'une connexion entre au moins un premier nœud et un second nœud pour permettre le partage d'informations de nœud, dans lequel les informations de nœud comprennent une valeur initiale du second nœud et une heure à laquelle une tranche de données d'un flux multimédia en direct est reçue par le second nœud ;
le calcul et l'analyse d'une valeur d'intégrité pour le second nœud (50B) sur la base des informations de nœud et de l'heure représentées par un numéro de séquence de fichiers d'une dernière tranche de données reçue du flux multimédia en direct ; et
la détermination de s'il faut continuer à utiliser ou purger le second nœud (50B) sur la base du résultat de calcul et d'analyse.

5. Procédé de gestion de nœud de réseau poste à poste selon la revendication 4, comprenant en outre :
le tranchage du flux multimédia en direct en tranches de données selon des horodatages dans le flux multimédia en direct ; et
l'obtention d'une heure système actuelle.

6. Procédé de gestion de nœud de réseau poste à poste selon la revendication 5, comprenant en outre :
l'enregistrement de l'heure à laquelle la tranche de données est reçue par le second nœud.

7. Procédé de gestion de nœud de réseau poste à poste selon la revendication 4, dans lequel le calcul et l'analyse d'une valeur d'intégrité pour le second nœud sur la base des informations de nœud et de l'heure représentées par un numéro de séquence de fichiers d'une dernière tranche de données reçue du flux multimédia en direct comprend :
la comparaison d'une valeur d'intégrité du second nœud à un seuil préconfiguré ou le tri d'une pluralité de valeurs d'intégrité afin de déterminer s'il faut continuer à utiliser ou purger le second nœud.

8. Système de diffusion en continu en direct de réseau poste à poste, le système comprenant une mémoire configurée pour stocker des instructions pour mettre en œuvre le procédé de gestion de nœud selon l'une quelconque des revendications 4 à 7.

9. Système de diffusion en continu en direct de réseau poste à poste, le système comprenant un processeur configuré pour exécuter le procédé de gestion de nœud selon l'une quelconque des revendications 4 à 7.

10. Système de diffusion en continu en direct de réseau poste à poste, comprenant :
au moins deux nœuds, dans lequel les nœuds sont connectés les uns aux autres et partagent des informations de nœud comprenant une valeur de nœud initiale d'un nœud connecté correspondant des nœuds et l'heure à laquelle une tranche de données d'un flux multimédia en direct est reçue par le nœud connecté correspondant ;
un module d'évaluation (52 ; 300) configuré dans au moins l'un ou l'autre des nœuds pour calculer et analyser une valeur d'intégrité pour le nœud connecté correspondant sur la base des informations de nœud partagées et de l'heure représentées par un numéro de séquence de fichiers d'une dernière tranche de données reçue du flux multimédia en direct ; et
un module de purge (53 ; 400) configuré pour recevoir les résultats alimentés par le module d'évaluation et déterminer s'il faut continuer à utiliser ou purger le nœud connecté correspondant.

11. Système de diffusion en continu en direct de réseau poste à poste selon la revendication 10, comprenant en outre :
un module émetteur (21) configuré pour émettre une liste de nœuds en temps réel ; et
un module récepteur (51 ; 200) configuré pour recevoir la liste de nœuds émise par le module émetteur et les informations de nœud partagées.

12. Système de diffusion en continu en direct de réseau poste à poste selon la revendication 1, dans lequel le module d'évaluation (52 ; 300) est en outre configuré pour comparer la valeur d'intégrité calculée du nœud connecté correspondant à un seuil préconfiguré, et pour alimenter le résultat de comparaison au module de purge (53 ; 400).

13. Système de diffusion en continu en direct de réseau poste à poste selon la revendication 10, dans lequel le module d'évaluation (52 ; 300) est en outre configuré pour comparer la valeur d'intégrité calculée du nœud connecté correspondant à un seuil préconfiguré, et pour alimenter le résultat de comparaison au module de purge (53 ; 400).
